# EUROPÄISCHE PATENTSCHRIFT

(11) **EP 1 629 222 B1**
(45) Veröffentlichungstag und Bekanntmachung des Hinweises auf die Patenterteilung: **04.10.2006**
(21) Anmeldenummer: 04731589.0
(22) Anmeldetag: 07.05.2004
(51) Int. Cl.: F16H 61/02, F16H 59/10

(54) **VORRICHTUNG ZUR STEUERUNG EINES AUTOMATIKGETRIEBES**
DEVICE FOR CONTROLLING AN AUTOMATIC TRANSMISSION
DISPOSITIF DE COMMANDE D'UNE BOITE DE VITESSES AUTOMATIQUE

(30) Priorität: 14.05.2003 DE 10321530
(43) Veröffentlichungstag der Anmeldung: 01.03.2006
(73) Patentinhaber: ZF FRIEDRICHSHAFEN Aktiengesellschaft, 88038 Friedrichshafen (DE)
(72) Erfinder: BUCHER, Adolf, 88079 Kressbronn (DE); FRITZER, Anton, 88677 Markdorf (DE); PFLEGER, Tobias, 88045 Friedrichshafen (DE)
(86) Internationale Anmeldenummer: PCT/EP2004/004860
(87) Internationale Veröffentlichungsnummer: WO 2004/102042

(56) Entgegenhaltungen:
- EP-B- 0 890 046
- US-A- 3 695 121
- US-A- 4 519 273
- US-A- 5 437 204
- US-A- 6 110 071

## Beschreibung

Die vorliegende Erfindung betrifft eine hydraulische Steuervorrichtung zum Schalten eines Automatikgetriebes, insbesondere eines stufenlosen Umschlingungsgetriebes, mit wenigstens einem ersten und einem zweiten Schaltelement gemäß dem Oberbegriff des Hauptanspruches.

Stufenlose Umschlingungsgetriebe (CVT) für Kraftfahrzeuge bestehen üblicherweise aus einer Anfahreinheit, einer Vorwärts- und Rückwärtsfahreinheit, einem Variator, einer Zwischenwelle, einem Differential, sowie einem Steuergerät. Ein CVT wird üblicherweise von einer Brennkraftmaschine über eine Antriebswelle angetrieben und besitzt ein hydraulisches Anfahrelement. Die Vorwärts- und Rückwärtsfahreinheit dient der Drehrichtungsumkehr für Vorwärts- bzw. Rückwärtsfahrt und besteht üblicherweise aus einem Planetenwendegetriebe.

Der Variator besteht aus zwei Kegelscheibenpaaren und einem Umschlingungsmittel, wobei jedes Kegelscheibenpaar eine in axialer Richtung feststehende erste Kegelscheibe und eine in axialer Richtung verschiebbare zweite Kegelscheibe aufweist. Zwischen diesen beiden Kegelscheibenpaaren läuft das Umschlingungsmittel um.

Durch eine Verstellung der Kegelscheiben ändert sich der Laufradius des Umschlingungsmittels und damit die Übersetzung des Getriebes. Das zweite Kegelscheibenpaar ist drehfest mit einer Abtriebswelle verbunden, die das Moment über ein Zahnradpaar auf eine Zwischenwelle überträgt. Das Moment der Zwischenwelle wird über ein weiteres Zahnradpaar auf das Differential übertragen.

Die Steuerung bzw. Regelung des CVT wird üblicherweise über ein hydraulisches Steuergerät durchgeführt. Das hydraulische Steuergerät beinhaltet elektromagnetische Stellglieder und hydraulische Ventile. Eine Pumpe fördert hierbei ein Druckmittel aus einem Schmiermittelsumpf zu einem hydraulischen Steuergerät. Die elektromagnetischen Stellglieder werden dabei meist über eine elektronische Getriebesteuerung angesprochen.

Für die Betätigung der Vorwärts- und Rückwärtsfahreinheit werden üblicherweise Schaltelemente verwendet, die über eine Fahrstufenwähleinrichtung ausgewählt werden können. Diese Fahrstufenwähleinrichtung empfängt von einem Fahrer des Fahrzeuges Signale, mit denen der Fahrer z. B. die Fahrstufen P, R, N oder D auswählen kann. Die Fahrstufenwähleinrichtung entspricht üblicherweise einem manuell betätigten Wählhebel, mit dem der Fahrer das Signal an das Getriebe weitergibt. Dieser Wählhebel ist meist mechanisch mit einer Stelleinrichtung verbunden. Durch diese Stelleinrichtung werden dann die Ventile zur Befüllung der Schaltelemente mechanisch gesteuert.

In der EP 0 890 046 B1 wird eine solche Anordnung beschrieben. Dort werden zwei Schaltelemente über ein Hydrauliksystem mit Druck beaufschlagt. Dabei wird über einen sogenannten Wählschieber, welcher einem hydraulischen Ventil entspricht, die vom Fahrer gewählte Fahrstufe eingestellt. Der Wählhebel ist hier mechanisch direkt mit dem Wählschieber verbunden.

Die mechanische Ansteuerung des Wählschiebers besteht üblicherweise aus einem Bowdenzug, welcher den Wählhebel mit der Stelleinrichtung im Getriebe verbindet. Über den Bowdenzug wird die Stelleinrichtung bewegt, wodurch der Wählschieber dann mechanisch verstellt wird. Aufgrund der bevorzugten Lage der Stelleinrichtung auf der Oberseite des Getriebes und der Lage der Getriebesteuerung im Ölsumpf auf der Unterseite des Getriebes wird häufig der Wählschieber in einem separaten Wählschiebergehäuse in direkter Nähe der Stelleinrichtung geführt. Von diesem Wählschiebergehäuse ist dann eine hydraulische Verbindung zur Getriebesteuerung notwendig. Diese Verbindung wie auch das separate Wählschiebergehäuse an sich sind kostenaufwendig. Zudem engt die hydraulische Verbindung des Wählschiebergehäuses mit der Getriebesteuerung die Anordnung der einzelnen Getriebeelemente stark ein.

Aus der US 5 437 204 A sind die Merkmale des Oberbegriffes des Anspruches 1 bekannt.

Aufgabe der Erfindung ist es bekannte hydraulische Steuereinrichtungen zu verbessern.

Die Aufgabe wird durch eine hydraulische Steuervorrichtung zum Schalten eines Automatikgetriebes, insbesondere eines stufenlosen Umschlingungsgetriebes, mit den Merkmalen des Anspruchs 1 gelöst. Weitere Ausgestaltungen sind den Unteransprüchen zu entnehmen.

Die erfindungsgemäße Lösung befasst sich insbesondere mit der vorteilhaften Anordnung von Druckreglern und Magnetventilen, die zur Steuerung der Ventile für die Befüllung der Schaltelemente der Vor- und Rückwärtsfahreinheit dienen und über eine nichtmechanische Verbindung mit einer Fahrstufenwähleinrichtung verbunden sind.

In der Vorwärts- Rückwärtsfahreinheit werden über eine Anzahl an Schaltelementen verschiedene Fahrstufen ermöglicht. Dabei werden Ventile über eine Anzahl an Druckreglern und Magnetventilen angesteuert. Über eine elektronische Getriebesteuerung werden diese Druckregler und Magnetventile angesprochen. Die Druckregler und Magnetventile werden von einer Druckmittelpumpe mit Druckmittel versorgt. Der Ausgangsdruck der Druckregler und Mangetventile wird also elektronisch gesteuert und steuert dann wiederum eine Anzahl an Ventilen. Über diese Ventile werden Schaltelemente so mit Druckmittel beaufschlagt, dass sie verschiedene Fahrstufen ermöglichen.

Die hydraulischen Ventile, die für die Auswahl der Schaltelemente zuständig sind, haben keine mechanische Verbindung mehr mit der Fahrstufenwähleinrichtung. Statt dessen werden sie über eine Anzahl an Druckreglern und Magnetventilen hydraulisch angesteuert, welche wiederum elektronisch über die elektronische Getriebesteuerung angesteuert werden.

Eine vorteilhafte Ausgestaltung stellt ein Wählhebel als Fahrstufenwähleinrichtung dar, wobei die Verbindung des Wählhebels mit der Getriebesteuerung über einen Bowdenzug und eine sogenannte Wählwelle ermöglicht wird, welche als Stelleinrichtung dient. Dabei wird die Wählwelle durch den Bowdenzug gedreht und entsprechend der Position der Wählwelle wird ein elektronisches Signal an die Getriebesteuerung weitergegeben. Dementsprechend werden dann die Ventile zur Auswahl der Schaltelemente angesteuert.

Es besteht also nur noch eine nichtmechanische Verbindung zwischen der Stelleinrichtung und der Getriebesteuerung. Diese nichtmechanische Verbindung wird vorteilhafter Weise durch eine elektronische Verbindung zwischen der Wählwelle und der Getriebesteuerung dargestellt.

Bevorzugte Ausführungsbeispiele sind in den Zeichnungen 1 bis 7 dargestellt.
Dabei zeigen:
- Fig. 1: eine hydraulische Steuerung;
- Fig. 2: eine weitere hydraulische Steuerung;
- Fig. 3: eine weitere hydraulische Steuerung;
- Fig. 4: eine weitere hydraulische Steuerung;
- Fig. 5: eine weitere hydraulische Steuerung;
- Fig. 6: eine weitere hydraulische Steuerung und
- Fig. 7: eine weitere hydraulische Steuerung.

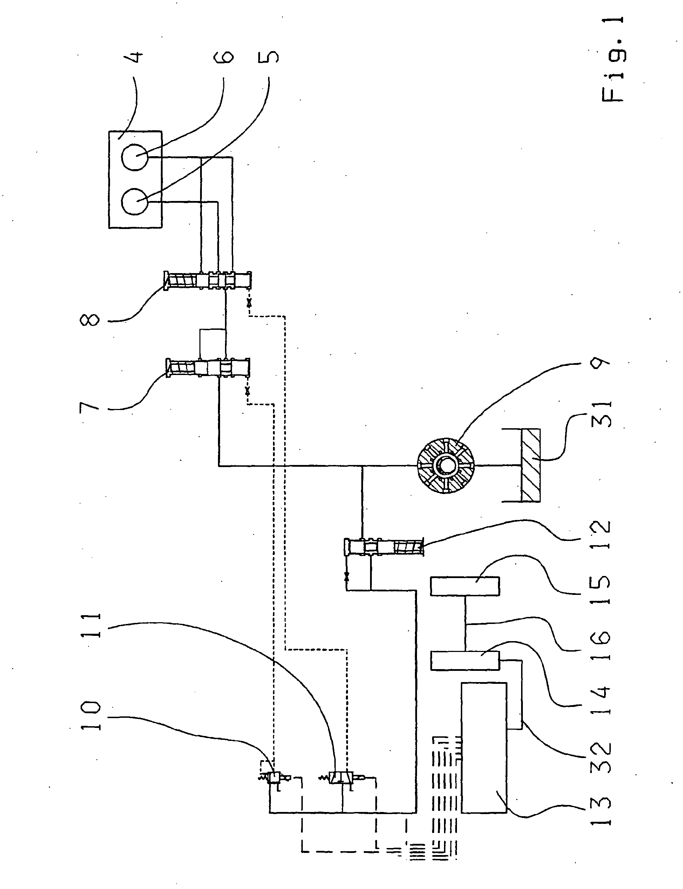

In Fig. 1 wird eine erste Ausgestaltung einer erfindungsmäßigen hydraulischen Steuerung dargestellt. Ein Druckkreis enthält die Vorwärts- Rückwärtsfahreinheit 4. Darin werden zwei Schaltelemente 5, 6 über zwei nacheinander angeordnete Ventile 7, 8 geschaltet. Das erste Ventil 7 wird direkt mit einem von der Druckmittelpumpe 9 ausgegebenen System- oder Hauptdruck versorgt. Über einen ersten Druckregler 10 wird dann der für das ausgewählte Schaltelement 5, 6 notwendige Druck am Ventil 7 eingestellt. Durch das zweite Ventil 8 wird ausgewählt, welches der Schaltelemente 5, 6 mit dem durch das erste Ventil 7 eingestellten Druck beaufschlagt wird. Das jeweils nicht beaufschlagte Schaltelement 5, 6 ist über das zweite Ventil 8 entlüftet. Das zweite Ventil 8 wird über ein erstes Magnetventil 11 gesteuert. Der erste Druckregler 10 sowie das erste Magnetventil 11 werden durch die Druckmittelpumpe 9 über ein Druckreduzierventil 12 mit Druckmittel versorgt, wobei die Pumpe 9 das Druckmittel aus dem Druckmittelsumpf 31 fördert. Zudem wird der erste Druckregler 10 und das erste Magnetventil 11 über eine elektronische Getriebesteuerung 13 angesprochen. Dafür gibt der Fahrer ein Signal über die Fahrstufenwähleinrichtung 15 und die mechanische Verbindung 16 zur Stelleinrichtung 14 weiter. Von der Stelleinrichtung 14 wird das Signal über die vorteilhafter Weise elektronische nichtmechanische Verbindung 32 an die elektronische Getriebesteuerung 13 weitergegeben. Es besteht also eine nichtmechanische Verbindung 32 zwischen der Stelleinrichtung 14 und der Getriebesteuerung 13. Das erste und zweite Ventil 7, 8 sind nur indirekt mit der Stelleinrichtung 14 verbunden.

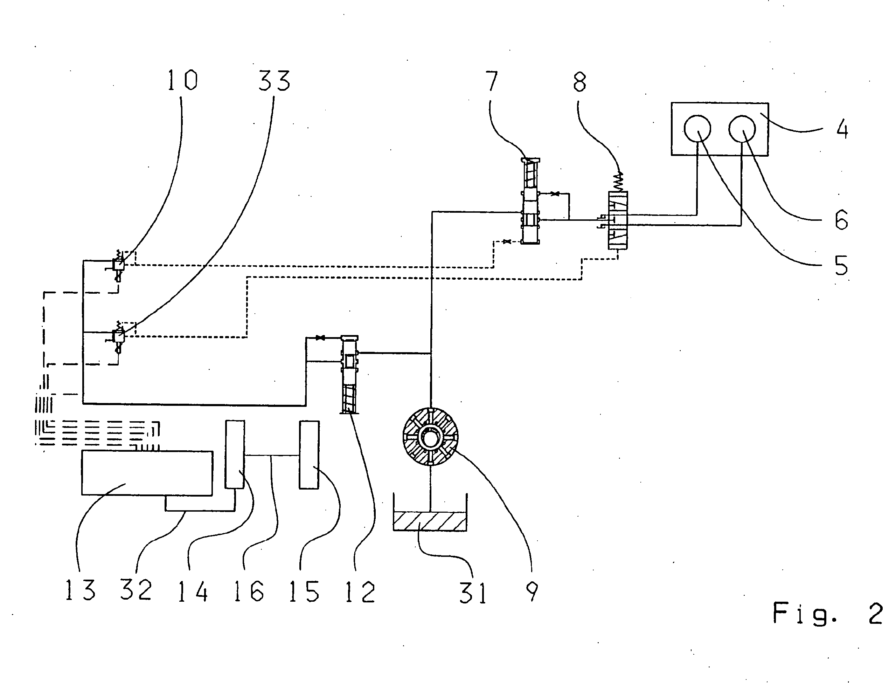

Fig. 2 stellt eine zweite Ausgestaltung einer erfindungsgemäßen hydraulischen Steuerung dar. In dieser Variante ist im Vergleich zur Variante aus Fig. 1 das zweite Ventil 8 dreistufig ausgelegt. Damit wird eine zusätzliche Stellung ermöglicht, in der beide Schaltelemente 5, 6 drucklos geschaltet und damit entlüftet werden. Für die Steuerung des zweiten Ventils 8 wird ein zweiter Druckregler 33 verwendet. Durch das dreistufig ausgestaltete zweite Ventil 8 ist die hydraulische Steuerung gegen Einfachfehler gesichert.

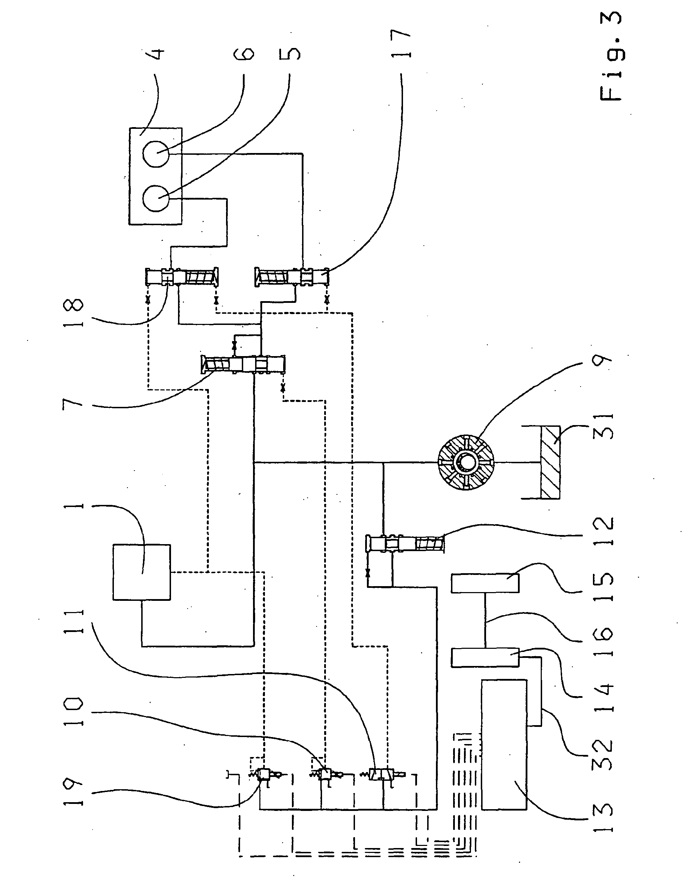

Fig. 3 stellt eine weitere Ausgestaltung einer hydraulischen Steuerung dar. In dieser Variante wird über das erste Ventil 7 weiterhin der Druck gesteuert, mit dem die Schaltelemente 5, 6 beaufschlagt werden sollen. Das zweite Ventil 8 aus Fig. 1 ist hier allerdings in zwei einzelne Ventile 17, 18 aufgeteilt. Mit jedem Ventil 17, 18 kann unabhängig voneinander ausgewählt werden, ob das nachgeschaltete Schaltelement 5, 6 mit Druck beaufschlagt wird oder nicht. Beide Ventile 17, 18 werden dabei mit dem Ausgangsdruck des ersten Ventils 7 beaufschlagt. Ebenfalls beide Ventile 17, 18 werden von dem ersten Magnetventil 11 angesteuert, wobei das dritte Ventil 17 mit dem Steuerdruck des ersten Magnetventils 11 in Richtung 'Öffnen' und das vierte Ventil 18 mit dem Steuerdruck des ersten Magnetventils 11 in Richtung 'Schließen' beaufschlagt wird. Eins der beiden Ventile 17, 18 wird zusätzlich mit einem weiteren Steuerdruck verknüpft. Vorteilhafter Weise wird dafür der Steuerdruck eines dritten Druckreglers 19 verwendet, welcher zudem den Steuerdruck für einen weiteren Verbraucher, vorteilhafter Weise für einen Variator, regelt. Wenn dieser weitere Steuerdruck über einen zu bestimmenden Grenzwert steigt, wird das vierte Ventil 18 geschlossen. Damit ist die Steuerung wiederum gegen Einfachfehler abgesichert.

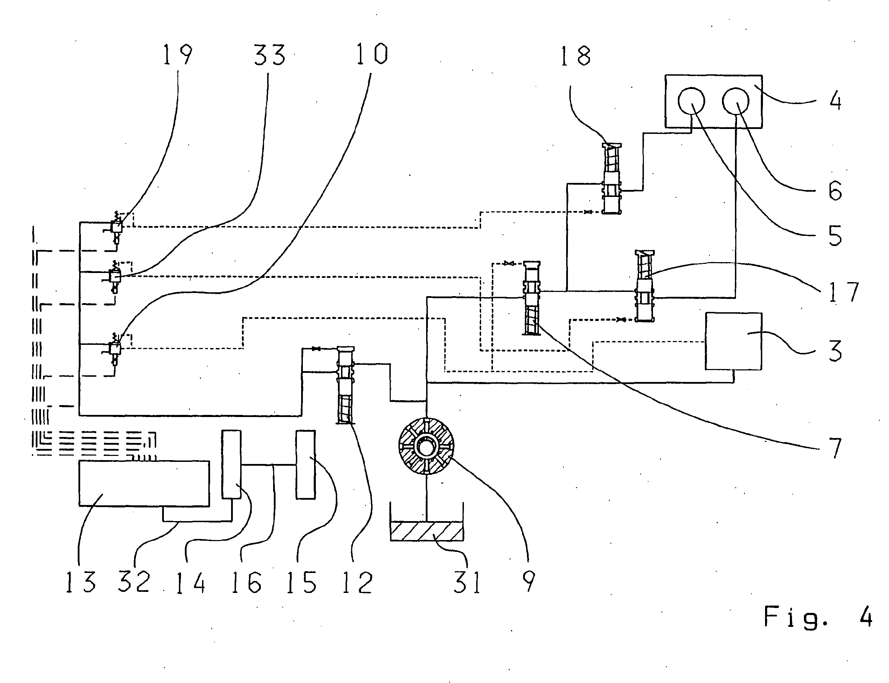

Fig. 4 stellt eine weitere Ausgestaltung einer hydraulischen Steuereinheit dar. In dieser Variante wird wie in Fig. 2 über das erste Ventil 7 weiterhin der Druck gesteuert, mit dem die Schaltelemente 5, 6 beaufschlagt werden sollen. Das zweite Ventil 8 aus Fig. 3 ist in zwei einzelne Ventile 17, 18 aufgeteilt. Mit den Ventilen 17, 18 kann unabhängig voneinander ausgewählt werden, ob das nachgeschaltete Schaltelement 5, 6 mit Druck beaufschlagt wird, oder nicht. Beide Ventile 17, 18 werden dabei mit dem Ausgangsdruck des ersten Ventils 7 beaufschlagt. Das dritte und vierte Ventil 17, 18 werden über einen zweiten und einen dritten Druckregler 19, 33 angesteuert. Das erste Ventil wird über den ersten Druckregler 10 angesteuert, welcher vorteilhafter Weise einen weiteren Verbraucher 3 regelt. Dieser Verbraucher 3 stellt vorteilhafter Weise ein hydraulisches Anfahrelement dar.

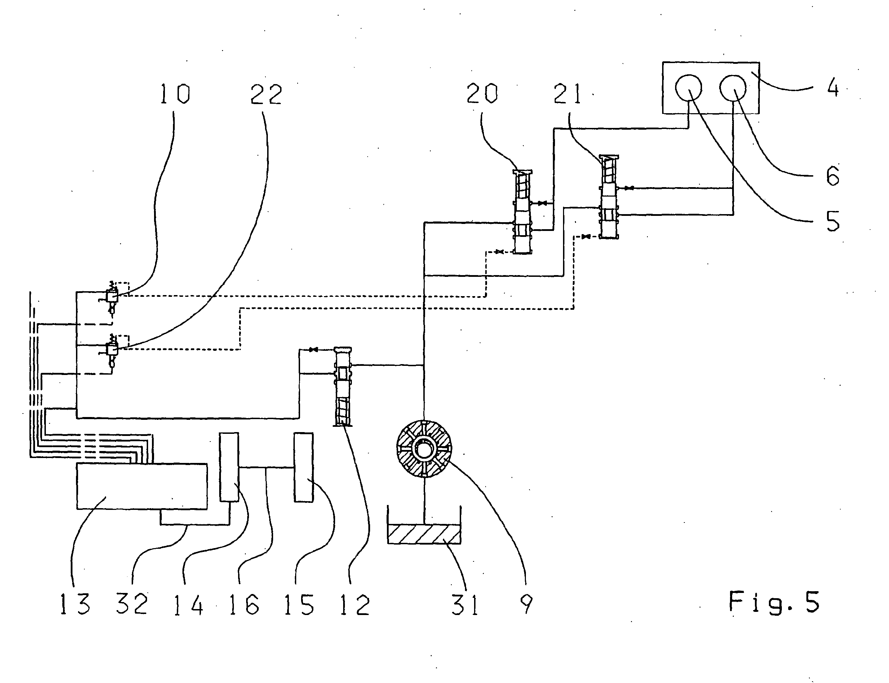

Fig. 5 zeigt eine Ausgestaltung der erfindungsgemäßen Steuereinheit mit direkt von der Druckmittelpumpe 9 beaufschlagten fünften und sechsten Ventil 20, 21. Dabei wird das fünfte Ventil 20 über den ersten Druckregler 10 und das sechste Ventil 21 über einen vierten Druckregler 22 gesteuert. Beide Ventile 20, 21 können deswegen von einander unterschiedliche Drücke einregeln. Damit ist eine sogenannte Überschneidungsschaltung möglich, d.h., eine der beiden Schaltelemente 5, 6 kann schon befüllt werden, solange das andere Schaltelement 6, 5 noch entlüftet wird. Dadurch kann schneller geschaltet werden und der Übergang zwischen den Fahrstufen kann zudem weicher gestaltet werden, als wenn das fünfte und sechste Ventil 20, 21 nacheinander befüllt werden.

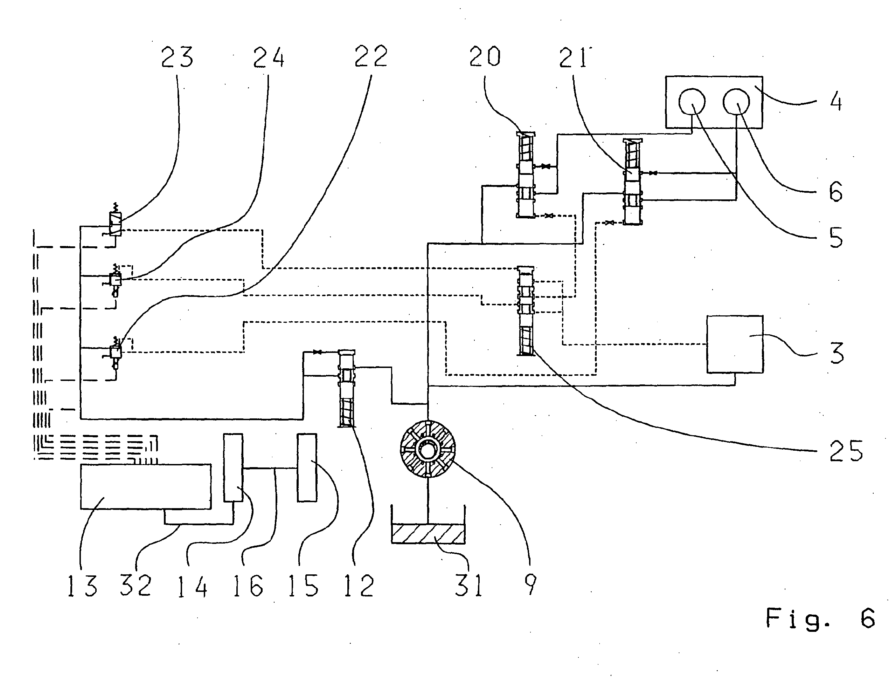

Die in Fig. 6 dargestellte Ausgestaltung entspricht im Prinzip der in Fig. 5 gezeigten, wobei der erste Druckregler 10 gegen ein kostengünstigeres zweites Magnetventil 23 ausgetauscht wird. Dies ist möglich, da für das fünftes Ventil 20 ein Steuerdruck eines weiteren Verbrauchers 3, vorzugsweise des hydraulischen Anfahrelementes, verwendet wird. Dieses hydraulische Anfahrelement 3 ist bei einer Rückwärtsfahrt aufgrund der in dieser Fahrstufe R vorherrschenden geringen Drehzahlen und Geschwindigkeiten immer voll geöffnet. Damit wird ein Steuerdruck eines fünften Druckreglers 24, welcher das hydraulische Anfahrelement 3 steuert, bei der Rückwärtsfahrt nicht benötigt und kann somit das fünfte Ventil 20 steuern. Sobald die Fahrstufe R ausgewählt ist, wird ein siebtes Ventil 25 durch den Steuerdruck des zweiten Magnetventils 23 so umgeschaltet, dass der Steuerdruck des fünften Druckreglers 24 das fünfte Ventil 20 ansteuert. Durch die doppelte Nutzung des fünften Druckreglers 24 kann mit dieser Ausgestaltung eine Überschneidungsschaltung entsprechend Fig. 6 zu nahezu den Kosten der Steuerung entsprechend Fig. 1 realisiert werden.

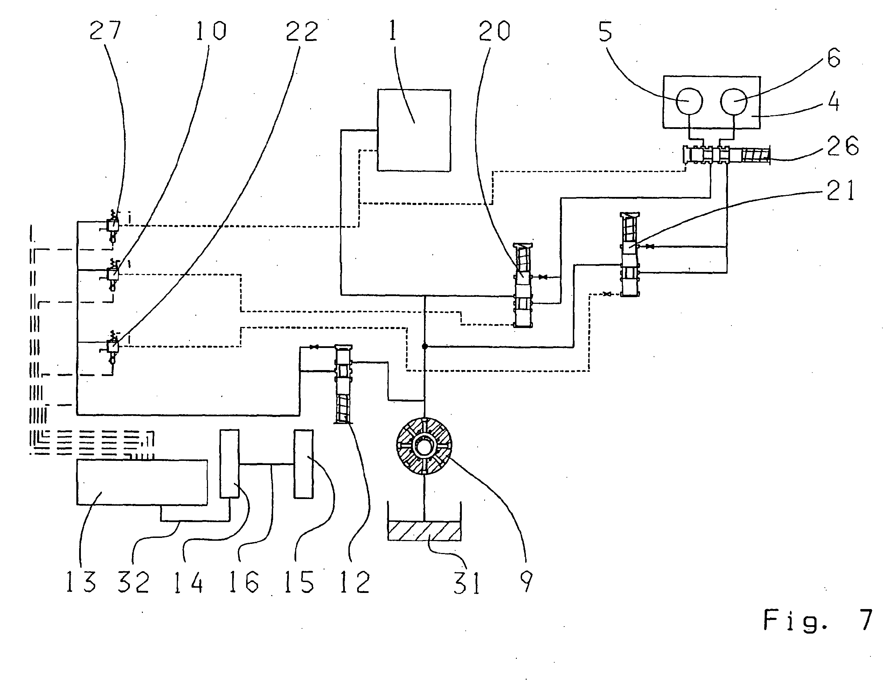

Die in Fig. 7 dargestellte Ausgestaltung entspricht auch im Prinzip der in Fig. 5 gezeigten, wobei zur weiteren Absicherung gegen Fehlfunktionen ein achtes Ventil 26 verwendet wird. Diese achte Ventil 26 ist ein dreistufiges Ventil und wird über einen sechsten Druckregler 27 gesteuert. Der sechste Druckregler 27 steuert einen weiteren Verbraucher 1, welcher vorzugsweise einem Kegelscheibenpaar eines Variators entspricht. Je nach Höhe des Steuerdrucks des sechsten Druckreglers 7 wird entweder das erste oder das zweite Schaltelement 5, 6 beaufschlagt oder beide Schaltelemente 5, 6 entlüftet. Damit ist die hydraulische Steuereinrichtung wiederum gegen Einfachfehler geschützt, wie bei dieser Anordnung auch eine Überschneidungsschaltung möglich ist.

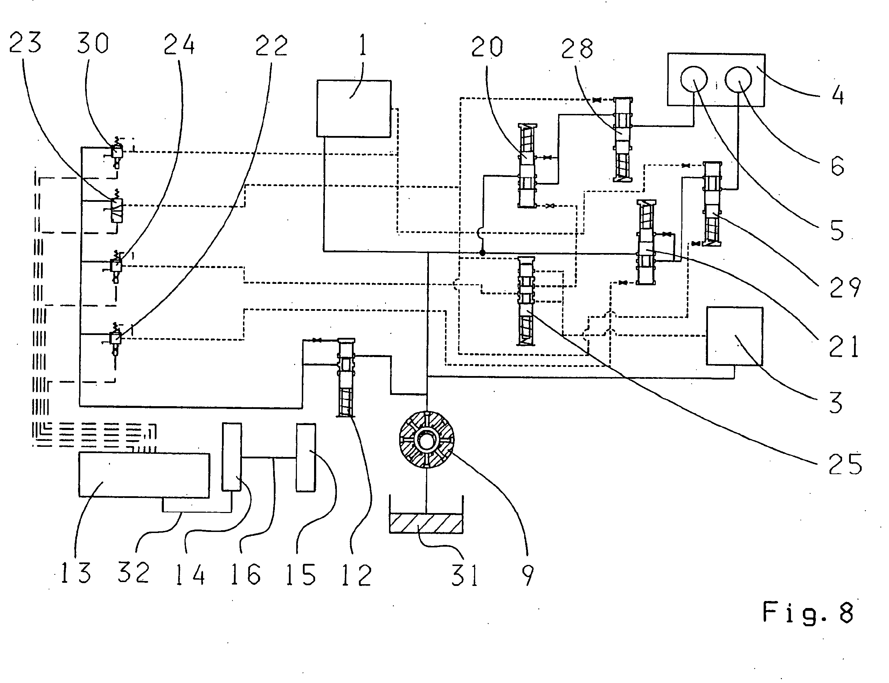

Fig. 8 stellt eine Ausgestaltung einer hydraulischen Steuereinheit entsprechend Fig. 5 dar, wobei für jedes Schaltelement 5, 6 ein zusätzliches neuntes und zehntes Ventil 28, 29 verwendet wird. Das zweite Magnetventil 23 steuert bei dieser Variante neben dem siebten Ventil 25 zudem ein neuntes und zehntes Ventil 28, 29 an. Das zehnte Ventil 29 wird außerdem noch über einen siebten Druckregler 30 angesteuert. Dieser siebte Druckregler 30 steuert zudem einen weiteren Verbraucher 1, welcher vorteilhafter Weise einem Kegelscheibenpaar eines Variators entspricht. Damit ist eine Überschneidungsschaltung möglich. Das neunte und zehnte Ventil 28, 29 könnten dabei auch in das fünfte und sechste Ventil 20, 21 integriert werden, wobei deren Baulänge damit natürlich steigen würde. Die Erfindung ist im Zusammenhang mit einem CVT beschrieben. Sie ist jedoch gleichermaßen auch für andere Automatikgetriebe anwendbar, welche hydraulische Kupplungen zum Umsteuern der Fahrtrichtung aufweisen, wie insbesondere Stufenautomatgetriebe.

### Bezugszeichen

- 1: Verbraucher
- 3: Verbraucher
- 4: Vorwärts- Rückwärtsfahreinheit
- 5: erstes Schaltelement
- 6: zweites Schaltelement
- 7: erstes Ventil
- 8: zweites Ventil
- 9: Pumpe
- 10: erster Druckregler
- 11: erstes Magnetventil
- 12: Ventil
- 13: elektronische Getriebesteuerung
- 14: Stelleinrichtung
- 15: Fahrstufenwähleinrichtung
- 16: nicht mechanische Verbindung
- 17: drittes Ventil
- 18: viertes Ventil
- 19: dritter Druckregler
- 20: fünftes Ventil
- 21: sechstes Ventil
- 22: vierter Druckregler
- 23: zweites Magnetventil
- 24: vierter Druckregler
- 25: siebtes Ventil
- 26: achtes Ventil
- 27: sechster Druckregler
- 28: neuntes Ventil
- 29: zehntes Ventil
- 30: siebter Druckregler
- 31: Druckmittelsumpf
- 32: nichtmechanische Verbindung
- 33: zweiter Druckregler

- D: Vorwärtsfahrstufe
- N: Neutralfahrstufe
- R: Rückwärtsfahrstufe

## Patentansprüche

1. Vorrichtung zur hydraulischen Steuerung eines Automatikgetriebes, insbesondere eines stufenlosen Umschlingungsgetriebes, mit einer Vorwärts-Rückwärtsfahreinheit (4), welche durch wenigstens ein erstes und ein zweites Schaltelement (5, 6) geschaltet wird, wobei die Schaltelemente (5, 6) über mindestens zwei Ventile (7, 8, 17, 18, 20, 21) über eine Druckmittelpumpe (9) mit Druck beaufschlagt werden sowie mit einer Fahrstufenwähleinrichtung (15), mit welcher wenigstens zwischen einer Vorwärtsfahrstufe (D), einer Neutralfahrstufe (N) oder eine Rückwärtsfahrstufe (R) gewählt werden kann und welche mechanisch mit einer Stelleinrichtung (14) verbunden ist, wobei die Stelleinrichtung (14) zur Auswahl der Fahrstufen eine nichtmechanische Verbindung (32) zur Betätigung der Ventile (7, 8, 17, 18, 20, 21) besitzt, das mit Systemdruck beaufschlagte erste Ventil (7) über einen ersten Druckregler (10) gesteuert wird und den Druck einstellt, mit dem die Schaltelemente (5, 6) beaufschlagt werden, sowie mindestens ein Ventil (8, 17, 18) welches auswählt, welches Schaltelement (5,6) mit dem Ausgangsdruck des ersten Ventils (7) beaufschlagt wird, **dadurch gekennzeichnet, dass** sie ein drittes und viertes Ventil (17, 18) besitzt, mit welchen ausgewählt wird, ob die jeweils nachgeschalteten Schaltelemente (5, 6) mit dem Ausgangsdruck des ersten Ventils (7) beaufschlagt werden, wobei über das dritte Ventil (17) eine Bremse und über das vierte Ventil (18) eine Kupplung beaufschlagt wird und weiterhin das vierte Ventil (18) zusätzlich über einen dritten Druckregler (19) angesteuert wird, wobei der dritte Druckregler (19), der das vierte Ventil (18) ansteuert, zudem einen weiteren Verbraucher (1) steuert und dass das dritte und vierte Ventil (17, 18) über das erste Magnetventil (11) gesteuert werden.

2. Vorrichtung nach Anspruch 1, **dadurch gekennzeichnet, dass** die Pumpe (9) Druckmittel direkt auf mindestens ein fünftes und ein sechstes Ventil (20, 21) fördert, welche über einen ersten, vierten oder fünften Druckregler (10, 22, 24) gesteuert werden und zwei Schaltelemente (5,6) der Vorwärts- Rückwärtsfahreinrichtung (4) mit Druck beaufschlagen.

3. Vorrichtung nach Anspruch 2, **dadurch gekennzeichnet, dass** das erstes Schaltelement (5) eine Bremse ist, welche bei einer Rückwärtsfahrstufe (R) mit Druck beaufschlagt wird und das zweite Schaltelement (6) eine Kupplung ist, welche bei einer Vorwärtsfahrstufe (D) mit Druck beaufschlagt wird.

4. Vorrichtung nach Anspruch 3, **dadurch gekennzeichnet, dass** das fünfte Ventil (20) nur bei Auswahl der Rückwärtsfahrstufe (R) über einen fünften Druckregler (24) gesteuert wird, wobei der fünfte Druckregler (24) bei Auswahl einer anderen Fahrstufe einen weiteren Verbraucher (3), welcher die Druckversorgung eines hydraulischen Anfahrelementes darstellt, regelt und die Auswahl, welchen Verbraucher (2, 3) der fünfte Druckregler (24) anspricht über ein siebtes Ventil (25) gesteuert wird.

5. Vorrichtung nach Anspruch 4, **dadurch gekennzeichnet, dass** ein achtes Ventil (26) vorgesehen ist, welches zwischen dem fünften bzw. sechsten Ventil (20, 21) und den Schaltelementen (5, 6) angebracht ist und welches entscheidet ob entweder eines der beiden Schaltelementen (5, 6) mit Druck beaufschlagt oder beide Schaltelemente (5, 6) entlüftet werden sollen, wobei das achte Ventil (26) über einen sechsten Druckregler (27) gesteuert wird.

6. Vorrichtung nach Anspruch 5, **dadurch gekennzeichnet, dass** der sechste Druckregler (27) einen weiteren Verbraucher (1) steuert.

7. Vorrichtung nach Anspruch 6, **dadurch gekennzeichnet, dass** der weitere Verbraucher (1) einem Kegelscheibenpaar eines Variators entspricht.

## Claims

1. The invention relates to a device for the hydraulic control of an automatic transmission, in particular a continuously variable transmission, with a forward/rearward driving unit (4), which is controlled by at least one first and one second control element (5, 6), with the control elements (5, 6) being pressurized via at least two valves (7, 8, 17, 18, 20, 21) via a pressure pump (9), and with a driving-position selector (15) with which selection is possible between at least one forward driving position (D), one neutral driving position (N) and one rearward driving position (R) and which is mechanically linked to a positioner (14), with the positioner (14) possessing a non-mechanical connection (32) for selection of the driving positions and activation of the valves (7, 8, 17, 18, 20, 21), with the system-pressure-actuated first valve (7) being controlled via a first pressure regulator (10) and setting the pressure with which the control elements (5, 6) are actuated, and with at least one valve (8, 17, 18) selecting which control element (5, 6) is actuated by the outlet pressure of the first valve (7), **characterized in that** a third and fourth valve (17, 18) are provided to select whether each secondary control element (5, 6) is actuated by the outlet pressure of the first valve (7), with the third valve (17) acting on a brake and the fourth valve (18) acting on a clutch, and with the fourth valve (18) being additionally controlled via a third pressure regulator (19), with the third pressure regulator (19), which controls the fourth valve (18), also controlling an additional consumer (1), and with the third and fourth valve (17, 18) being controlled via the first solenoid valve (11).

2. A device according to claim 1, **characterized in that** the pump (9) feeds a pressure medium to at least a fifth and a sixth valve (20, 21), which are controlled via a first, fourth or fifth pressure regulator (10, 22, 24) and pressurize two control elements (5, 6) of the forward/rearward driving unit (4).

3. A device according to claim 2, **characterized in that** the first control element (5) is a brake, which is pressurized while a rearward driving position (R) is engaged, and that the second control element (6) is a clutch, which is pressurized while a forward driving position (D) is engaged.

4. A device according to claim 3, **characterized in that** the fifth valve (20) is controlled via a fifth pressure regulator (24) only if the rearward driving position (R) is selected, with the fifth pressure regulator (24) controlling an additional consumer (3) if a different driving position is selected, with this consumer representing the pressure supply of a hydraulic starting component, and with the selection as to which consumer (2, 3) is actuated by the fifth pressure regulator (24) being controlled via a seventh valve (25).

5. A device according to claim 4, **characterized in that** an eighth valve (26) is provided, which is arranged between the fifth or sixth valve (20, 21) and the control elements (5, 6) and which decides if one of the two control elements (5, 6) is to be pressurized or both control elements (5, 6) are to be vented, with the eighth valve (26) being controlled via a sixth pressure regulator (27).

6. A device according to claim 5, **characterized in that** the sixth pressure regulator (27) controls an additional consumer (1).

7. A device according to claim 6, **characterized in that** the additional consumer (1) corresponds to a V-pulley of a variator.

## Revendications

1. Dispositif de commande hydraulique d'une boîte de vitesses automatique, en particulier d'une boîte de vitesses à variation continue, doté d'une unité de marche avant et marche arrière (4), laquelle est actionnée au moins avec un premier et un deuxième élément de commande (5, 6), sachant que les éléments de commande (5, 6) sont pressurisés à l'aide d'au moins deux soupapes (7, 8, 17, 18, 20, 21) par l'intermédiaire d'une pompe de pression (9), ainsi que d'un dispositif de sélection des positions de conduite (15), qui permet de sélectionner au moins entre une position de marche avant (D), une position de point mort (N) ou une position de marche arrière (R) et qui est lié par voie mécanique à un dispositif actionneur (14), sachant que le dispositif actionneur (14) possède pour la sélection des positions de conduite une liaison non mécanique (32) qui permet d'actionner les soupapes (7, 8, 17, 18, 20, 21), et sachant que la première soupape (7), pressurisée avec la pression du système, est commandée par un premier régulateur de pression (10) pour régler la pression avec laquelle sont pressurisés les éléments de commande (5, 6), et sachant qu'il possède en outre au moins une soupape (8, 17, 18) qui sélectionne lequel des éléments de commande (5, 6) est pressurisé avec la pression de sortie de la première soupape (7), **caractérisé en ce que** le dispositif possède une troisième et une quatrième soupape (17, 18), qui permet de choisir si les éléments de commande montés en aval (5, 6) sont pressurisés avec la pression de sortie de la première soupape (7), sachant que par l'intermédiaire de la troisième soupape (17) est pressurisé un frein et par l'intermédiaire de la quatrième soupape (18) est pressurisé un embrayage, et **en ce que**, en outre, la quatrième soupape (18) est en plus commandée par un troisième régulateur de pression (19), sachant que le troisième régulateur de pression (19), qui commande la quatrième soupape (18), commande, en plus, un autre consommateur (1) et **en ce que** la troisième et la quatrième soupape (17, 18) sont commandées par la première électrovanne (11).

2. Dispositif selon la revendication 1, **caractérisé en ce que** la pompe (9) refoule du fluide de pression directement vers au moins une cinquième et une sixième soupape (20,21), qui sont commandées par un premier, un quatrième ou un cinquième régulateur de la pression (10, 22, 24) et qui pressurisent deux éléments de commande (5, 6) du dispositif de marche avant et marche arrière (4).

3. Dispositif selon la revendication 2, **caractérisé en ce que** le premier élément de commande (5) est un frein, qui est pressurisé dans une position de marche arrière (R) et **en ce que** le deuxième élément de commande (6) est un embrayage, qui est pressurisé dans une position de marche avant (D).

4. Dispositif selon la revendication 3, **caractérisé en ce que** la cinquième soupape (20) n'est commandée par un cinquième régulateur de pression (24) qu'en cas de sélection de la position de marche arrière (R), sachant qu'en cas de sélection d'une autre position de marche le cinquième régulateur de pression (24) règle un autre consommateur (3), lequel représente le bloc hydraulique d'un élément de démarrage hydraulique, et sachant que la sélection du consommateur (2, 3) qui est actionné par le cinquième régulateur de pression (24) est commandée par une septième soupape (25).

5. Dispositif selon la revendication 4, **caractérisé en ce qu'**une huitième soupape (26) est prévue, qui est interposée entre la cinquième ou la sixième soupape (20, 21) et les éléments de commande (5, 6) et qui décide si un des deux éléments de commande (5, 6) est pressurisé ou si les deux éléments de commande (5, 6) doivent être purgés, sachant que la huitième soupape (26) est commandée par un sixième régulateur de pression (27).

6. Dispositif selon la revendication 5, **caractérisé en ce que** le sixième régulateur de pression (27) commande un autre consommateur (1).

7. Dispositif selon la revendication 6, **caractérisé en ce que** l'autre consommateur (1) est un couple de poulies d'un variateur.
